# FASCICULE DE BREVET EUROPEEN

(11) **EP 0 868 464 B1**
(45) Date de publication et mention de la délivrance du brevet: **19.05.2004**
(21) Numéro de dépôt: 96942407.6
(22) Date de dépôt: 13.12.1996
(51) Int. Cl.: C08G 61/12

(54) **PROCEDE POUR REDUIRE LA REACTIVITE DE SURFACE DE COPOLYMERES OBTENUS PAR POLYMERISATION ELECTROCHIMIQUE**
VERFAHREN ZUR REAKTIVITÄTSERNIEDRIGUNG DER OBERFLÄCHE VON COPOLYMEREN ERHALTEN DURCH ELEKTROPOLYMERISATION
METHOD FOR REDUCING THE SURFACE REACTIVITY OF COPOLYMERS PRODUCED BY ELECTROCHEMICAL POLYMERISATION

(30) Priorité: 19.12.1995 FR 9515044
(43) Date de publication de la demande: 07.10.1998
(73) Titulaire: Le Commissariat à l'Energie Atomique, 75017 Paris (FR)
(72) Inventeur: LIVACHE, Thierry, F-38560 Haute-Jarrie (FR); ROGET, André, F-38120 Saint-Egrève (FR); TEOULE, Robert, F-38000 Grenoble (FR)
(74) Mandataire: Vialle-Presles, Marie José
(86) Numéro de dépôt international: PCT/FR1996/002003
(87) Numéro de publication internationale: WO 1997/022648

(56) Documents cités:
- WO-A-95/29199

## Description

La présente Invention est relative au traitement de polymères synthétisés par voie électrochimique, en vue de leur utilisation pour la construction de matrices adressées.

La construction de matrices de composés ayant une affinité pour des produits biologiques, par exemple des matrices de peptides, d'oligonucléotides, de récepteurs, etc... peut être réalisée de plusieurs façons. Trois méthodes ont été principalement décrites : le dépôt photochimiquement dirigé [FODOR S. et al., Science, 251, 767-773, (1991)], le dépôt mécanique [KHRAPKO K.R. et al., DNA Sequencing and Mapping, 1, 375-338, (1991)] ou le dépôt électrochimiquement dirigé [Demande internationale PCT publiée sous le numéro WO 94/22889 ; LIVACHE et al., Nucl. Acids. Res. 22, 15, 2615-2921 (1994)].

Les dépôts d'oligonucléotides sur les différents points du support peuvent être réalisés soit par synthèse nucléotidique *in situ* [FODOR S. et al. ; Demande PCT WO 94/22889], soit par fixations successives d'oligonucléotides synthétisés préalablement [FODOR S. et al. ; KHRAPKO K.R. et al. ; Demande PCT WO 94/22889].

Dans le premier cas, l'on procède à un lavage de toute la surface du support après chaque addition de nucléotide. Ce lavage sert simplement à éliminer l'excès de réactif présent sur le support ; il n'est en rien lié à la nature même du support.

Dans le second cas (fixations successives d'oligonucléotides) deux types de traitement sont décrits ; certains auteurs [(SAIKI R.K. et al., Proc. Natl. Acad. Sci. USA, 89, 6230-6234, (1989), KRAPKO et al (déjà cité) ou LAMTURE et al., Nucl. Acids. Res., 22, 2121-2125, (1994)] procèdent à un seul lavage final du support après la fixation de tous les oligonucléotides. Ce lavage à l'eau, ou dans un tampon d'hybridation permet d'éliminer les sondes n'ayant pas réagi sur le support. Dans le même but, LIVACHE et al. rincent le support à l'eau entre chaque fixation d'oligonucléotide ; il y a donc, dans ce cas autant de rinçages qu'il y a de couplages d'oligonucléotides.

Cependant, les Inventeurs ont constaté que lorsque plusieurs dépôts de polymères obtenus de façon électrochimique sont effectués en des points différents d'une même matrice d'électrode, des contaminations sporadiques inter-électrodes peuvent avoir lieu. En effet, lors de la synthèse d'un polymère sur l'électrode numéro *n* en présence de l'oligonucléotide *n*, une contamination par l'oligonucléotide *n* sur l'électrode *n-1*, déjà recouverte par un oligonucléotide *n-1* peut être observée. Il s'en suit un signal faiblement positif du spot *n-1* lors de l'hybridation avec l'oligonucléotide *n*. Ce phénomène peut être illustré par les résultats de quatre hybridations croisées citées dans la publication de LIVACHE et al., Nucl. Acids. Res. 22, 15, 2615-2921 (1994). Sur les quatre dépôts, deux contaminations légères (environ 10% du signal maximum) sont visibles. Elles avaient été interprétées à l'époque comme étant des hybridations non spécifiques ; cependant, des expériences ultérieures des Inventeurs, impliquant des séquences oligonucléotidiques différentes ont montré qu'il s'agissait en fait de contaminations.

Il est important, pour une utilisation diagnostique d'une matrice d'oligonucléotides couplés à un support, que ce type de contaminations soit totalement éliminé. Or, les traitements de lavage habituellement mis en oeuvre sont insuffisants pour obtenir ce résultat.

La présente Invention s'est fixé pour but le traitement spécifique de polymères obtenus de façon électrochimique, afin de diminuer, voire d'annuler, les phénomènes de contamination sporadiques.

Dans ce but les Inventeurs ont étudié le mécanisme de polymérisation électrochimique. On sait que cette polymérisation fait intervenir en particulier des réactions radicalaires [GENIES et al., J. Electroanal. Chem., 149, 101-113, (1993)], et lorsqu'un polymère *n-1* est synthétisé, il peut éventuellement garder en surface pendant un certain temps, des espèces réactives capables de capter des produits lors de la polymérisation sur l'électrode *n*.

Les Inventeurs ont émis l'hypothèse qu'en réduisant la réactivité de surface du polymère, l'on parviendrait à éliminer les contaminations observées lors de la synthèse adressée de molécules biologiques en surface dudit polymère.

La présente Invention a pour objet un procédé de synthèse d'un copolymère par copolymérisation électrochimique, caractérisé en ce qu'il comprend un traitement permettant de réduire la réactivité de surface dudit copolymère.

En particulier, la présente Invention a pour objet un procédé de préparation d'un copolymère de formule générale (I) suivante : 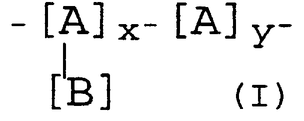 par copolymérisation électrochimique d'un composé de formule générale (II) suivante : 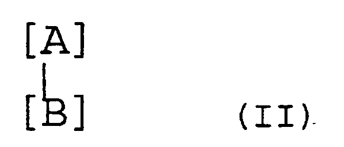 avec un composé [A] ,
[A] représentant une unité monomère d'un polymère susceptible d'être obtenu par copolymérisation électrochimique, [B] représentant un groupe latéral qui peut être un monomère ou un polymère, lié à l'unité [A] par liaison covalente, ou par l'intermédiaire d'un bras espaceur, et x et y représentant des nombres entiers égaux ou supérieurs à 1, lequel procédé est caractérisé en ce qu'il comprend, à l'issue de ladite copolymérisation électrochimique, au moins une étape où l'on soumet le copolymère obtenu à un traitement permettant de réduire sa réactivité de surface.
   Au sens de la présente Invention, on entend par "réactivité de surface" la persistance, à la surface du copolymère formé, d'espèces réactives capables de fixer une unité de formule (II), et par "réduction de la réactivité de surface", on entend l'inactivation au moins partielle de ces espèces réactives, ce qui ne permet la fixation que d'une quantité nulle ou faible d'unités de formule (II). Les contaminations résultant de cette fixation sont ainsi supprimées ou réduites jusqu'à ne plus être détectables, ou à ne produire qu'un signal négligeable, facilement distinguable d'un signal positif.
   Selon un mode de mise en oeuvre préféré de la présente Invention, [A] représente un monomère de polymère conducteur électronique ; de préférence ledit polymère conducteur électronique est choisi parmi le polyacétylène, la polyazine, le poly(p-phénylène), le poly(p-phénylène vinylène), le polypyrène, le polypyrrole, le polythiophène, le polyfuranne, le polysélénophène, la polypyridazine, le polycarbazole, la polyaniline, et leurs dérivés substitués (les substituants peuvent être par exemple des chaînes d'hydrocarbures saturés ou non, (de préférence des chaînes en C₁₋₃),des cycles aromatiques ou non, ou des hétérocycles, etc...) ; ledit polymère conducteur électronique peut également être un copolymère de deux ou plusieurs monomères [A] différents, par exemple des monomères de pyrrole et des monomères de thiophène.
   Avantageusement, [A] est une unité pyrrole.
   Selon un mode de mise en oeuvre préféré de la présente Invention, [B] représente un nucléotide, un oligonucléotide ou un de leurs dérivés ou analogues.
   Dans le cadre de l'exposé de la présente Invention, on entend par exemple par dérivé ou analogue de nucléotide, des nucléotides modifiés, tels que ceux décrits par UHLMANN, [Chemical Review, 90:4, 543-584 (1990)] ; des d'analogues de nucléotides entrant dans la composition d'oligonucléotides synthétiques ; des dérivés de nucléotides portant des fonctions protégées qui sont couramment utilisés pour la synthèse des acides nucléiques.
[B] peut aussi être un composé non naturel pouvant s'hybrider avec les acides nucléiques, tels que ceux décrits par UHLMANN (publication précitée).

Les Inventeurs ont constaté que trois types de traitement pouvaient être mis en oeuvre pour réduire la réactivité des polymères :
- Un traitement chimique, à base de produits connus pour leur activité antiradicalaire ou leur activité inhibitrice de la polymérisation radicalaire ;
- Un traitement électrochimique permettant de réduire ou de suroxyder le polymère ;
- Un rinçage en présence de produits capables d'éliminer les courtes chaînes de polymère en croissance adsorbées sur le support.

Selon un mode de mise en oeuvre préféré de la présente Invention, le traitement mis en oeuvre pour réduire la réactivité de surface du copolymère comprend au moins :
- un traitement chimique antiradicalaire ; ou bien
- un traitement électrochimique permettant de modifier le degré d'oxydation dudit polymère ; ou bien
- un traitement comportant au moins un rinçage en présence d'un agent tensio-actif, ou bien une combinaison d'au moins deux parmi les trois traitements ci-dessus.

Un traitement chimique conforme à l'Invention peut être mis en oeuvre de façon simple en procédant à un rinçage du polymère par une solution contenant un produit antiradicalaire.

Avantageusement, les antioxydants tels que les dérivés du tocophérol (famille de la vitamine E) sont utilisés. Il est également avantageux d'utiliser des inhibiteurs ou des retardants de polymérisation radicalaire, tels que par exemple le nitrobenzène ou les benzoquinones, qui sont des retardants classiques de la polymérisation du styrène [ODIAN G., Principles of polymerization, JOHN WILEY & Sons, Interscience Publication, (1981)]. Ces produits, dissous dans un solvant adéquat (par exemple l'eau, l'acétonitrile, l'éthanol, ou un mélange de ces solvants), se sont en effet avérés également actifs vis-à-vis de la réactivité des polymères fabriqués de façon électrochimique (polypyrrole par exemple).

Le traitement électrochimique peut être mis en oeuvre en réduisant ou en oxydant le polymère conducteur de façon contrôlée, par exemple dans un système électrochimique à 3 électrodes. On choisira, pour la mise en oeuvre de ce traitement, une gamme de potentiel dans laquelle [B] est stable (par exemple de -1 à +1V/ECS pour les acides nucléiques).

Le rinçage en présence d'agents tensioactifs permet d'éliminer les chaînes courtes de polymère conducteur encore réactives. De préférence, chaque rinçage par une solution contenant un agent tensioactif doit être suivie d'un ou plusieurs rinçages visant à éliminer les traces de tensioactif. Lorsque l'on travaille sur des polymères chargés (comme par exemple du polypyrrole sous sa forme oxydée), on choisira de préférence des agents tensioactifs non-ioniques qui seront plus faciles à éliminer.

Le procédé conforme à la présente Invention est plus particulièrement destiné à être mis en oeuvre lors de la synthèse d'un ensemble de copolymères de formule générale (I) dont deux au moins comprennent un groupe latéral [B] différent, sur un même support dont la surface est constituée d'électrodes disposées en matrice, les copolymères comprenant un groupe latéral [B] différent étant portés par des électrodes différentes. Dans ce cadre, les copolymères de formule générale (I) sont synthétisés l'un après l'autre, chacun sur son électrode-support respective, en mettant en oeuvre un procédé conforme à l'Invention, tel que défini ci-dessus. En d'autres termes, après la synthèse de chaque copolymère, est effectué un traitement ayant pour but de réduire sa réactivité de surface, et permettant d'éviter sa contamination par des réactifs utilisés dans la synthèse du polymère suivant.

La mise en oeuvre d'une méthode de traitement conforme à l'Invention permet ainsi, contrairement aux rinçages à l'eau ou avec un tampon, d'éliminer les contaminations inter-électrodes, et d'obtenir une matrice de plots parfaitement individualisés. Les traitements conformes à l'Invention sont faciles à mettre en oeuvre et peuvent être automatisés.

Dans tous les cas, le support de polymère conducteur portant la molécule d'intérêt biologique est fabriqué par exemple selon le procédé décrit dans le Brevet WO 94/22889. Seuls les traitements réalisés après la synthèse de chaque dépôt diffèrent.

La présente Invention sera mieux comprise à l'aide du complément de description qui va suivre, qui se réfère à des exemples de mise en oeuvre du procédé conforme à l'Invention.

Il doit être bien entendu toutefois que ces exemples sont donnés uniquement à titre d'illustration de l'objet de l'Invention dont ils ne constituent en aucune manière une limitation.

### EXEMPLE 1 : MISE EN OEUVRE DE METHODES DE DE-CONTAMINATION CONFORMES A L'INVENTION LORS DE LA PREPARA-TION DE MATRICES DE POLYPYRROLE PAR COPOLYMERISATION

### 1) Synthèse des oligonucléotides

Le support de synthèse consiste en une plaque de silicium portant 48 électrodes d'or indépendantes et isolées les unes des autres. Chaque électrode est un carré dont la dimension du côté est soit 25, 50, 100 ou 200 µm.

On procède à la synthèse localisée, sur chaque électrode, d'un polymère de polypyrrole sur lequel est greffé, de façon covalente, un oligonucléotide, par copolymérisation de noyaux de pyrrole oxydé, dont certains portent ledit oligonucléotide.

La polymérisation est conduite, selon le procédé décrit dans la demande PCT WO 94/22889 dans une solution contenant 2.10⁻² M de pyrrole, 6.10⁻⁸ M de pyrrole substitué (oligonucléotide porteur d'un groupe pyrrole noté pyr par la suite) et 0,1 M de LiClO₄.

Les oligonucléotides portant le pyrrole en 5' (oligonucléotides G-pyr, T1-pyr, T2-pyr) ont été synthétisés selon la méthode décrite dans la demande PCT WO 94/22889, et purifiés par HPLC sur phase inverse.

Séquence des oligonucléotides utilisés

Le modèle de matrice qui a été utilisé pour étudier les contaminations est constitué par une plaquette de 5 électrodes portant chacune un dépôt différent, à savoir, dans l'ordre des synthèses :
- Electrode 1 : un dépôt de polypyrrole pur (témoin négatif) ;
- Electrode 2 : un dépôt d'un copolymère de polypyrrole et de l'oligonucléotide G-pyr,
- Electrode 3 : un dépôt d'un copolymère de polypyrrole et de l'oligonucléotide T1-pyr,
- Electrode 4 : un dépôt d'un copolymère de polypyrrole et de l'oligonucléotide T2-pyr ;
- Electrode 5 : un dépôt de polypyrrole pur.

Après le branchement de l'électrode sur laquelle va être opéré le dépôt, la plaquette est introduite dans la cellule réactionnelle en présence d'une contre-électrode de platine et d'une électrode de référence au calomel (ECS) et de 600 µl de milieu réactionnel comprenant éventuellement les oligonucléotides-pyrrole désirés. Les réactions d'oxydation du monomère et de réduction du polymère sont assurées par une variation cyclique du potentiel entre - 0,35 et + 0,85 V/ECS.

L'intégration du courant par rapport au temps (quantité d'électrons consommée) permet une évaluation de la masse de polymère formé sur la surface de l'électrode et donc de l'épaisseur du film. Cela assure une bonne reproductibilité des synthèses.

Après chaque synthèse, la cellule et la plaquette sont rincées selon les différentes procédures décrites ci-dessous, puis l'électrode précédemment utilisée est déconnectée, et l'électrode suivante est connectée. La plaquette est alors plongée dans un milieu réactionnel comprenant un autre couple oligonucléotide-pyrrole.

Après le dernier lavage spécifique, la plaquette est déconnectée puis rincée à l'eau distillée.

### 2) Hybridation et détection des oligonucléotides

Le contrôle de la spécificité des dépôts est réalisé par hybridation de sondes complémentaires aux oligonucléotides fixés sur le support.

### Hybridation :

Les réactions d'hybridation sont conduites successivement à 40°C durant 15 mn, dans un volume final de 10 µl d'un tampon phosphate 20mM pH 7,4, NaCl 300mM, EDTA 2mM, SDS 0,5%, en présence de 0,06 pmole d'oligonucléotide biotinylé en 5', respectivement complémentaire à la séquence G, T1 ou T2.

### Détection :

Après l'hybridation, la plaquette est lavée à température ambiante dans le tampon d'hybridation dilué 4 fois. Après un rinçage dans du PBS-NaCl 0,4 M, Tween 20 à 0,5%, la plaquette est incubée 15 mn à température ambiante dans ce même tampon en présence de 2,5 µg/ml de conjugué streptavidine-phycoérythrine. Un ultime rinçage au PBS-NaCl-Tween est réalisé puis la plaquette est montée sur une lame de microscope puis recouverte par une lamelle.

La matrice est alors observée par microscopie à fluorescence, et l'intensité de fluorescence de chaque point est évaluée.

### 3) Influence du traitement sur la spécificité de la localisation du signal fluorescent.

### Généralités :

Tous les lavages sont réalisés sur la plaquette et la cellule, à température ambiante et après chaque synthèse de polymère (sauf mention contraire), selon l'un des protocoles suivants :
1) rinçage à l'eau (identique à celui décrit dans la demande PCT WO 94/22889)
2) rinçage long à l'eau : cinq rinçages à l'eau successifs
3) traitement électrochimique 1 : Suroxydation du dépôt à 1,2 V/ECS pendant 1 mn puis rinçage à l'eau
4) traitement chimique : «mélange S » est un solvant comportant 68% d'acétonitrile, 16% d'éthanol et 16% d'eau) ; «mélange S+vitE » est une dilution d'une solution alcoolique à 50 mM d'alpha-tocophérol à 1 mM dans le solvant « S » ; le traitement est suivi d'un rincage à l'eau ; la cuve est simplement rincée à l'eau
5) rinçage en présence d'un détergent anionique : rinçage à l'eau, puis dans une solution de dodecylsulfate de sodium (SDS) à 0,5%, suivi d'un autre rinçage à l'eau.
6) rinçage en présence d'un détergent non-ionique : rinçage à l'eau puis dans une solution de Tween 20 à 0,3%, suivi d'un autre rinçage à l'eau.

### b) Résultats :

Chaque matrice obtenue est hybridée successivement avec les trois sondes biotinylées complémentaires des oligonucléotides G, T1 et T2. L'hybridation est détectée par détermination de l'intensité de fluorescence, comme indiqué ci-dessous.

Les résultats sont reportés dans les tableaux 1A à 1F ci-dessous, qui reproduisent respectivement les résultats des expérimentations 1 à 6.

Dans ces tableaux, chaque colonne correspond à l'une des électrodes 1 à 5 ; chaque ligne correspond à l'une des sondes complémentaires respectivement de G, T1 et T2. L'intensité de fluorescence de chaque point est notée de 0 à +++, ou V(*,*) si le résultat est variable et non reproductible entre les deux limites précisées entre parenthèses.

**TABLEAU 1A**

| | 1 | 2 | 3 | 4 | 5 |
|---|---|---|---|---|---|
| compl. G | V(0,+) | +++ | 0 | 0 | 0 |
| compl. T1 | 0 | V(0,++) | +++ | 0 | 0 |
| compl. T2 | 0 | 0 | V(0,+) | +++ | 0 |

**TABLEAU 1B**

| | 1 | 2 | 3 | 4 | 5 |
|---|---|---|---|---|---|
| compl. G | V(0,+) | +++ | 0 | 0 | 0 |
| compl. T1 | 0 | V(0,++) | +++ | 0 | 0 |
| compl. T2 | 0 | 0 | V(0,+) | +++ | 0 |

**TABLEAU 1C**

| | 1 | 2 | 3 | 4 | 5 |
|---|---|---|---|---|---|
| compl. G | 0 | + | 0 | 0 | 0 |
| compl. T1 | 0 | 0 | ++ | 0 | 0 |
| compl. T2 | 0 | 0 | 0 | + | 0 |

**TABLEAU 1D**

| | 1 | 2 | 3 | 4 | 5 |
|---|---|---|---|---|---|
| compl. G | 0 | +++ | 0 | 0 | 0 |
| compl. T1 | 0 | 0 | +++ | 0 | 0 |
| compl. T2 | 0 | 0 | 0 | +++ | 0 |

**TABLEAU 1E**

| | 1 | 2 | 3 | 4 | 5 |
|---|---|---|---|---|---|
| compl. G | 0 | ++ | 0 | 0 | 0 |
| compl. T1 | 0 | 0 | ++ | 0 | 0 |
| compl. T2 | 0 | 0 | 0 | + | 0 |

**TABLEAU 1F**

| | 1 | 2 | 3 | 4 | 5 |
|---|---|---|---|---|---|
| compl. G | 0 | +++ | 0 | 0 | 0 |
| compl. T1 | 0 | 0 | +++ | 0 | 0 |
| compl. T2o | 0 | 0 | 0 | +++ | 0 |

Ces résultats montrent que 3 types de traitement sont plus efficaces que le traitement initial (n° 1) pour diminuer les réactions non spécifiques dues aux contaminations :
- Le traitement impliquant une suroxydation (traitement n° 3)
- Le rinçage en présence d'un produit antiradicalaire : la vitamine E (traitement n° 4)
- Les rinçages en présence de tensioactifs (traitement n° 5 et 6).

## Revendications

1. Procédé pour réduire la réactivité de surface d'un copolymère obtenu par copolymérisation électrochimique, **caractérisé en ce que** l'on soumet ledit copolymère à au moins un traitement choisi parmi:
- un traitement chimique antiradicalaire;
- un traitement électrochimique permettant de modifier le degré d'oxydation dudit polymère ;
- un traitement comportant au moins un rinçage en présence d'un agent tensio-actif.

2. Procédé selon la revendication 1, pour réduire la réactivité de surface d'un copolymère de formule générale (I) suivante : 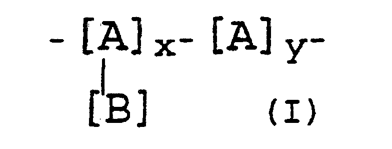 **caractérisé en ce qu'**il comprend :
- la copolymérisation électrochimique, d'un composé de formule générale (II) suivante : 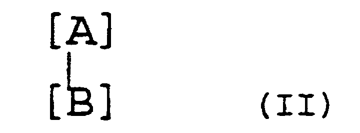 avec un composé, [A]
[A] représentant une unité monomère d'un polymère susceptible d'être obtenu par copolymérisation électrochimique, [B] représentant un groupe latéral qui peut être un monomère ou un polymère, lié à l'unité [A] par liaison covalente, ou par l'intermédiaire d'un bras espaceur, et x et y représentant des nombres entiers, égaux ou supérieurs à 1 ; et
- la mise en oeuvre d'un traitement tel que défini dans la revendication 1.

3. Procédé selon la revendication 2,
**caractérisé en ce que** [A] représente un monomère de polymère conducteur électronique.

4. Procédé selon la revendication 3 ou 4, **caractérisé en ce que** [A] représente un monomère de polymère conducteur électronique choisi parmi le polyacétylène, la polyazine, le poly(p-phénylène), le poly(p-phénylène vinylène), le polypyrène, le polypyrrole, le polythiophène, le polyfuranne, le polysélénophène, la polypyridazine, le polycarbazole, la polyaniline, et les dérivés substitués de ces polymères.

5. Procédé selon la revendication 4,
**caractérisé en ce que** [A] est une unité pyrrole.

6. Procédé selon une quelconque des revendications 2 à 5, **caractérisé en ce que** [B] représente un nucléotide, un oligonucléotide ou un de leurs dérivés ou analogues.

7. Procédé de synthèse d'un ensemble de copolymères de formule générale (I) dont deux au moins comprennent un groupe latéral [B] différent, sur un même support dont la surface est constituée d'électrodes disposées en matrice, les copolymères comprenant un groupe latéral [B] différent étant portés par des électrodes différentes, et étant synthétisés l'un après l'autre, chacun sur son électrode-support respective, en mettant en oeuvre un procédé selon une quelconque des revendications 1 à 6.

## Patentansprüche

1. Verfahren zur Verringerung der Oberflächenreaktivität eines durch elektrochemische Copolymerisation erhaltenen Copolymeren, **dadurch gekennzeichnet, dass** man das Copolymer mindestens einer Behandlung unterwirft, die ausgewählt wird unter:
- einer chemischen Behandlung gegen Radikale;
- einer elektrochemischen Behandlung, die es ermöglicht, den Oxidationsgrad des Polymeren zu modifizieren;
- einer Behandlung, die mindestens ein Spülen in Gegenwart eines grenzflächenaktiven Stoffs beinhaltet.

2. Verfahren nach Anspruch 1 zur Verringerung der Oberflächenreaktivität eines Copolymeren der folgenden allgemeinen Formel (I): 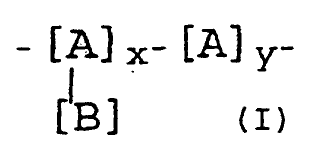 **dadurch gekennzeichnet, dass** es umfasst:
- elektrochemische Copolymerisation einer Verbindung der folgenden allgemeinen Formel (II): 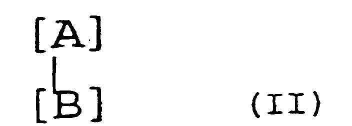
mit einer Verbindung [A]
wobei [A] eine Monomereinheit eines Polymeren darstellt, das durch elektrochemische Copolymerisation erhalten werden kann, [B] eine Seitengruppe darstellt, die ein Monomer oder Polymer sein kann, das durch kovalente Bindung oder mittels eines Abstandhalters an die Einheit [A] gebunden ist, und x und y ganze Zahlen darstellen, die gleich 1 oder höher sind; und
- Durchführung einer Behandlung, wie sie in Anspruch 1 definiert ist.

3. Verfahren nach Anspruch 2, **dadurch gekennzeichnet, dass** [A] ein Monomer eines Elektronenleiter-Polymers darstellt;

4. Verfahren nach Anspruch 3 oder 4, **dadurch gekennzeichnet, dass** [A] ein Monomer eines Elektronenleiter-Polymers, ausgewählt aus Polyacetylen, Polyazin, Poly(pphenylen), Poly(p-phenylenvinylen), Polypyren, Polypyrrol, Polythiophen, Polyfuran, Polyselenophen, Polypyridazin, Polycarbazol, Polyanilin und den substituierten Derivaten dieser Polymeren, darstellt.

5. Verfahren nach Anspruch 4, **dadurch gekennzeichnet, dass** [A] eine Pyrroleinheit ist.

6. Verfahren nach einem der Ansprüche 2 bis 5, **dadurch gekennzeichnet, dass** [B] ein Nucleotid, ein Oligonucleotid oder eins ihrer Derivate oder Analoga darstellt.

7. Verfahren zur Synthese einer Anordnung von Copolymeren der allgemeinen Formel (I), von denen mindestens zwei eine unterschiedliche Seitengruppe [B] haben, auf einem gleichen Träger, dessen Oberfläche von in einer Matrix angeordneten Elektroden gebildet wird, wobei die Copolymeren, die eine unterschiedliche Seitengruppe [B] umfassen, von verschiedenen Elektroden getragen werden und nacheinander synthetisiert werden, jedes auf seinem entsprechenden Elektrodenträger, wobei ein Verfahren nach einem der Ansprüche 1 bis 6 angewendet wird.

## Claims

1. Method for reducing the surface reactivity of a copolymer obtained by electrochemical copolymerization, **characterized in that** said copolymer is subjected to at least one treatment chosen from:
- one antiradical chemical treatment;
- one electrochemical treatment which makes it possible to modify the degree of oxidation of said polymer;
- one treatment comprising at least one rinsing operation in the presence of a surface-active agent.

2. Method according to Claim 1 for reducing the surface reactivity of a copolymer of following general formula (I): 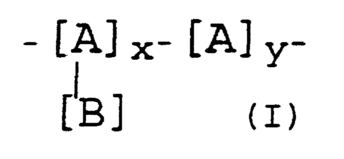 **characterized in that** it comprises:
- the electrochemical copolymerization of a compound of following general formula (II): 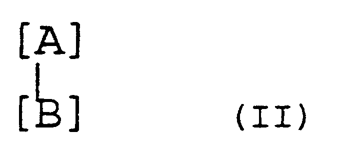 with a compound, [A],
[A] representing a monomer unit of a polymer capable of being obtained by electrochemical copolymerization, [B] representing a side group, which can be a monomer or a polymer, linked to the unit [A] by covalent bond or via a spacer arm, and x and y representing integers equal to or greater than 1; and
- the implementation of a treatment as defined in claim 1.

3. Method according to Claim 2, **characterized in that** [A] represents a monomer of electronically conductive polymer.

4. Method according to either one of Claims 3 and 4, **characterized in that** [A] represents a monomer of electronically conductive polymer chosen from polyacetylene, polyazine, poly(p-phenylene), poly(p-phenylene vinylene), polypyrene, polypyrrole, polythiophene, polyfuran, polyselenophene, polypyridazine, polycarbazole, polyaniline and the substituted derivatives of these polymers.

5. Method according to Claim 4, **characterized in that** [A] is a pyrrole unit.

6. Method according to any one of Claims 2 to 5, **characterized in that** [B] represents a nucleotide, an oligonucleotide or one of their derivatives or analogues.

7. Method for the synthesis of an array of copolymers of general formula (I), at least two of which comprise a different side group [B], on the same support, the surface of which is constituted of electrodes arranged as a matrix, the copolymers comprising a different side group [B] being carried by different electrodes and being synthesized one after the other, each on its respective electrode-support, by employing a method according to any one of Claims 1 to 6.
